# EUROPEAN PATENT APPLICATION

(11) **EP 3 937 526 A1**
(43) Date of publication of application: **12.01.2022**
(21) Application number: 21181740.8
(22) Date of filing: 25.06.2021
(51) Int. Cl.: H04W 12/30, H04W 4/50, H04W 4/70, H04L 29/08, H04W 4/14

(54) **ENROLMENT PROCEDURE FOR A DEVICE TO A CLOUD STORAGE**

(30) Priority: 07.07.2020 DK PA202070465
(71) Applicant: Grundfos Holding A/S, 8850 Bjerringbro (DK)
(72) Inventor: Hyldgaard, Kim, 8850 Bjerringbro (DK)
(74) Representative: Plougmann Vingtoft a/s

(57) **Abstract**

The present invention relates to a computer implemented method of enrolment of a device to a cloud storage. The device has unique identifier and the device is before enrolment, un-authenticated and/or un-authorized in the cloud storage.

## Description

### FIELD OF THE INVENTION

The present invention relates to a computer implemented method of enrolment of a device to a cloud storage. The device has unique identifier and the device is before enrolment, un-authenticated and/or un-authorized in the cloud storage.

### BACKGROUND OF THE INVENTION

Pumps and other equipment is increasing connected to cloud based solutions for the end-user of the equipment to access remotely the equipment, e.g. to monitor or alter settings of the equipment via the cloud.

Access to the equipment requires that the equipment is enrolled in the cloud and the end-user has access to the cloud. While it is a relatively simple task for the end-user to access the equipment once enrolled, the enrolment process is today a tedious task complicated by that the installation of the equipment often is done by an installer not being the end-user and by that the installer and end-user often are located distant to each other.

A typical way to enroll IoT equipment to a cloud would be to scan a QR code, type in a serial number and authenticate the IoT equipment in a secondary communication channel to open up for IoT communication through a primary communication channel.

Normally the cloud user needs to perform this action in order to be coupled to the IoT equipment or a cloud operator would need to perform the coupling (create the user and assign the IoT equipment to the user) manually as a second step.

US 2016319826A1 discloses a system which includes a pump controller, a user device, and a server. The pump controller transmits identity information via a first communication connection with the pump controller. The server validates the identity information in response to determining that characteristics of the identity information satisfy one or more predetermined validity criteria that are different than the identity information. The pump controller establishes a second communication connection with the server using authentication credentials generated by the server and transmitted to the pump controller in response to validating the identity information. The server transmits a unique activation code to the pump controller via the second connection. The pump controller displays the activation code. A user device associated with a user account transmits the activation code to the server. The server authorizes remote communications with the pump controller via the user account in response to determining that the activation request includes the activation code.

While the known methods for enrolment does enrol the device, they are often prone to security issues.

Hence, an improved enrolment would be advantageous, and in particular a more secure and/or trustworthy enrolment would be advantageous.

### OBJECT OF THE INVENTION

It is an object of the invention to provide a secure and/or automatic enrolment of devices such as IoT equipment to a cloud, where the devices has not been authenticated/authorized in the cloud prior to the procedure. It is another object of the invention to provide an enrolment that at least mitigate manual interaction from the cloud side.

It is a further object of the present invention to provide an alternative to the prior art.

### SUMMARY OF THE INVENTION

Thus, the above described object and several other objects are intended to be obtained in a first aspect of the invention by providing a computer implemented method of enrolment of a device to a cloud storage, the device having unique identifier and the device before enrolment is un-authenticated and/or un-authorized in the cloud storage. The method preferably comprises:
- retrieve, by an installer device, the device's unique identifier,
- storing, by the installer device, said unique identifier in the cloud storage,
- provide, by the cloud storage, a unique code affiliated to said unique identifier,
- receive, at the installer device, the unique code,
- forward, the unique code to a user, via a direct communication channel,
- claim, by use of the user device and the unique code, the device,
upon successful claim of the device, establish by use of the cloud storage, data communication between the device (1) and the user device.

By the present invention, the user is coupled securely and automatic with the device without any manual interaction from the cloud side. The user does not need to have any prior knowledge of the device and the user does not have to perform the installation/commissioning of the device.

*"A device having a unique identifier"* as used herein typically refers to an IoT device, being accessible via the internet and having an identifier uniquely identifying the device from other devices.

It is noted that the unique code and further unique code references herein by "D44F-542" and "B645" respectively are examples on codes and that the actual codes in most cases will contain a different combination of numbers and/or characters.

In some preferred embodiments, the method may further comprise:
- provide, by the installer device, a further unique code affiliated to said unique identifier,
- storing by the installer device said further unique code in the cloud storage,
- forward said further unique code together with said unique code to said user via said direct communication channel.

In some preferred embodiments, retrieval of the unique identifier may be carried out in consequence of a service technician actively activates a transmittal function of the device or passively reads, by use of the installer device the unique identifier, while the service technician preferably being in so close proximity to the device that he can visually inspect the device.

In some preferred embodiments, the unique code(s) may be forwarded to the user device by the installer device.

In some preferred embodiments, the claim of the device may comprising uploading the unique code(s) to the cloud storage by use of the user device.

In some preferred embodiments, the installer device in addition to retrieve the unique identifier may also retrieve commissioning data and/or data on installation of the device and may store said commissioning data and/or said data on installation of the device in the cloud storage.

In some preferred embodiments, the unique code(s) may be randomly generated, preferably to comprise both digits and characters.

In some preferred embodiments, direct communication channel may be established by use of a smart phone preferably wirelessly communicating with the user device.

In some preferred embodiments, the direct communication channel may be a channel not involving the cloud storage.

In some preferred embodiments, the installer device may retrieve the unique identifier by scanning the device, the scanning preferably comprises optically scanning and/or electronic the code from the device.

In some preferred embodiments, the cloud storage may be a service hosted for the user and may comprise
- a proprietary storage facility;
- a set-up service being adapted to
   ∘ receive the further unique code from the installer device,
   ∘ generate the unique code and transmit this unique code to the installer device,
   ∘ transfer the unique identifier to the proprietary storage facility
wherein, the proprietary storage facility may be adapted to receive from set-up service the unique codes and the unique identifier of the device, said proprietary storage facility being adapted to be in data communication with the device and the user device.

In some preferred embodiments, the device may be a pump, a valve, a motor, an actuator, in particular a hydraulic, a pneumatic or an electrical actuator, a sensor, in particular a sensor for sensing temperature, vibration, sound, light, pressure, flow and combinations of these, condition monitoring sensors, UV sensor, conductivity sensor, or a measuring instrument.

### BRIEF DESCRIPTION OF THE FIGURES

The present invention will now be described in more details with reference to the accompanying figures. The figures show ways of implementing the present invention and are not to be construed as being limiting to other possible embodiments falling within the scope of the attached claim set.
Figure 1 schematically illustrates enrolment of the device to a cloud storage according to a preferred embodiment of the invention, figure 1 contains a figure 1A and a figure 1B, where figure 1A details enrolment and figure 1B details successful claim of a device;
Figure 2 schematically illustrates data exchange between devices services and user during enrolment and claim of the device according to a preferred embodiment of the invention,
   and
Figure 3 schematically illustrates an architecture according to a preferred embodiment of the present invention,

### DETAILED DESCRIPTION OF PREFERRED EMBODIMENTS

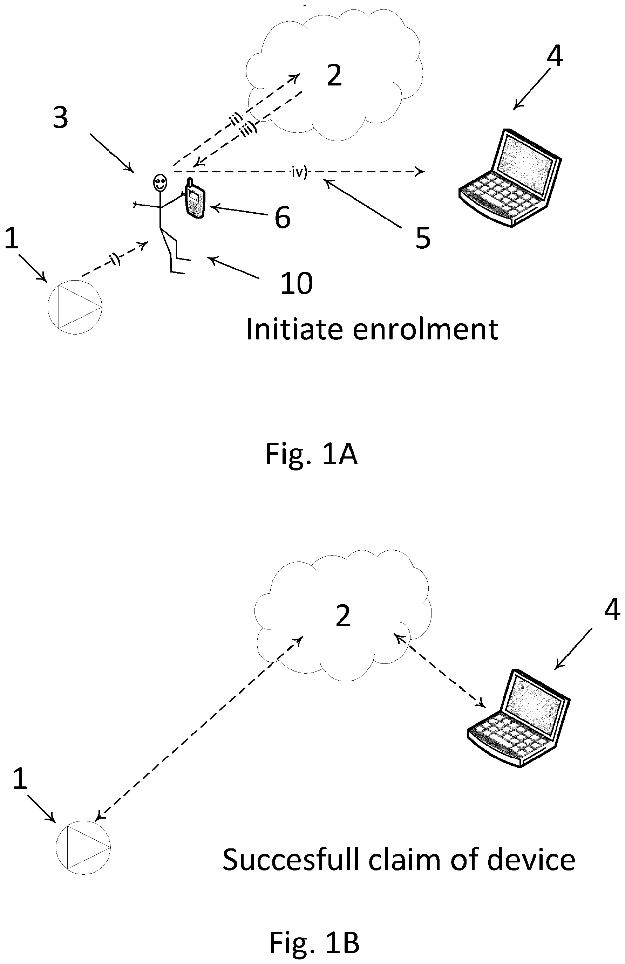

Reference is made to Fig. 1. This Fig. 1 illustrates in upper part of the figure (Fig. 1A), how the invention initiates enrolment of a device 1 and in the lower part of the figure (Fig. 1B), a configuration after the device 1 has been claimed successfully.

The invention resides inter alia in a computer implemented method of enrolment of a device 1 to a cloud storage 2. The cloud storage may be a conventional cloud storage but may also be a specific tailored cloud storage as will be disclosed below. A user will typically have access to the cloud storage 2 by a user device 4.

The device 1 is a device being accessible through internet to upload and/or download information, such as download to the device 1 set-up and control instructions and such as upload data pertaining to operation of the device 1. The device 1 has unique identifier (UID) which can be used to uniquely identify the specific device. The device 1 may also labelled and IoT device.

As access to the device 1 e.g. by the user device 4 via the cloud storage 2 requires that the device is authenticated and/or authorised in the cloud storage 2, the device must initially be enrolled to provide the authentication and/or authorization.

The method of enrolment comprises the following steps.

An installer, that is typically a physical person, is equipped with an installer device. An installer device 3 may be a smartphone 6 being configured to read information by e.g. RFID, Bluetooth, barcode scanning or other possible scanning devices. The device 1 has the capacity of providing its unique identifier UID to the smartphone.

The method comprises the step of retrieving, by the installer device 3, the device's 1 unique identifier UID. In Fig. 1A, this is illustrated by the dotted arrow labelled "i)".

The installer device 3, provides a further unique code B645 affiliated to said unique identifier UID. It is noted that depending on how the further unique code is provided, this step may be carried out before retrieving UID or after. By affiliated is typically meant that the further unique code is associated only with the UID in question.

After the further unique code is provided and the UID retrieved, the further unique code and said unique identifier UID are both stored in the cloud storage 2. This storing is carried out by the installer device 3, typically by a wireless transmission from the installer device 3 to the cloud storage 2. In Fig. 1A, this step is illustrated by the dotted arrow labelled "ii)"

When the cloud storage 2 has the further unique code and the UID, the cloud storage 2 provides a unique code D44F-542H affiliated to the further unique code B645 and transmits this unique code to the installer device 3, so that the the installer device (3) receives the unique code (D44F-542H). In Fig. 1A, this is illustrated by the dotted arrow labelled "iii)"

By these steps, the cloud storage now has the information on the device 1's UID identifying the device 1, as well as unique code(s) (B645-D44F-542H), which can be used to authenticate a user's access to the device 1, such as by comparing an input of a user containing an alleged code with the unique code known by the cloud storage 2 and grant access if a match is found.

However, the user don't have the unique code(s) yet and an aim of the invention is to obtain the unique code(s) in a secure manner and provide the user with the unique codes through a secure channel, not passing through the data exchange platform used between the device and the cloud storage 2.

The unique codes B645-D44F-542H are forward to a user via a direct communication channel 5. By direct communication channel is typically meant that the communication takes place without involving the cloud storage 2. Preferred direct communication channels are email, sms, a phone call, and even handling the codes over to a user by writing the codes on a piece of paper that are handed over to the user. This is in Fig. 1A indicated by the dotted arrow labelled "iv)".

The user in possession of the unique codes can now claim the device, by use of the user device 4. As indicated above, this claiming typically involves that once the cloud storage 2 receives the unique codes (together with a claim request), the cloud storage 2 compares the code received with those already stored.

It is noted that since the unique codes are affiliated with the unique identified UID of the device, the device can be uniquely located in the cloud storage at least mitigating the user from providing any other input than the unique codes.

It is further noted that although the unique codes are termed as unique code and further unique code, these codes may be seen as being assembled into a single code.

Upon successful claim of the device 1 (if the codes match), the cloud storage 2 establish data communication between the device 1 and the user device 4.

In alternative embodiments (not illustrated), the enrolment does not include the step of providing the further unique code B645 and the enrolment is based on the unique code provided by the cloud storage. Such embodiment typically comprises the following steps:
- retrieve, by an installer device 3, the device's 1 unique identifier UID
- storing, by the installer device 3, said unique identifier UID in the cloud storage 2,
- provide, by the cloud storage 2, the unique code D44F-542H affiliated to said unique identifier UID,
- receive, at the installer device 3, the unique code D44F-542H,
- forward, the unique code D44F-542H to a user, via the direct communication channel 5,
- claim, by use of the user device 4 and the unique code, the device 3,
- upon successful claim of the device 1, establish by use of the cloud storage, data communication between the device 1 and the user device 4.

In the following, the description is focussed on embodiments in which the unique code D44F-542H and the further unique code B645 are provided and used and these codes are references as "unique codes". However, the description also applies to embodiments where only the unique code D44F-542H is used, and the following description can in such cases be read "unique codes" as "unique code"

When enrolment of the device 1 has been carried out, the device 1 and cloud storage 2 typically exchange data through the internet. As the internet can be characterised as an unsecure data exchange platform, where one cannot without taking special measures claim the data exchange as secure whereby one may not be certain about the identity of the device 1. The present enrolment method secures that identity of the device 1 is trustworthy, that is includes a verification of the identity of the device 1. This is carried out by through another communication channel than the one used to exchange data between the device 1 and the cloud storage 2. This typically involves that a service technician is physically present at the device and verifies that it actually is the expected device 1 and not a computer hacker pretending to be a pump.

During enrolment in preferred embodiments, the invention preferably makes use of a thrust worthy installer device 3. The installer device 3 communicates with the pump 1 e.g. through Bluetooth, during which the service technician is so close to the device 1, to allow him to verify the correctness of the device 1. The communication channel between the device and installer device 3 by e.g. physically pushing a button on the device 1 to make a pairing between the installer device 3 and device 1. Such a pairing provides a trust all the way to the device 1. By storing the unique code(s) obtained in this manner moves the obtained thrust into the cloud storage.

In a particular preferred embodiment, the unique codes are forwarded the user device 4 by the installer device 3 transmitting these codes, typically in a wireless manner.

As indicated above, claim of the device 1 may preferably include the step of uploading the unique codes to the cloud storage 2 by use of the user device 4. In one example, the installer device 3 transmit the unique codes in a data transmission to an app of the user device 4. This app has a functionality of transmitting the unique codes in a data transmission to the cloud storage 2 initiated by a user pushing a button. By such a procedure, the claiming is simple and mitigates the possibility of a user input a wrong digit or character of the unique codes. However, such a procedure may call for implementing security measures depending on a user's preferences.

To increase security and reduce the risk of hacking, the transmission of data may be encrypted.

While the UID is a central element in enrolment of the device 1, the installer device may in addition to retrieve the unique identifier UID also retrieves commissioning data and/or data on installation of the device 1. If such data is retrieved, the installer device typically stores the data in the cloud storage 2. These data will typically be made accessible for the user, when the user has successfully claimed the device 1.

One way to provide the uniqueness of the unique codes is to provide them randomly. Accordingly, the unique codes may be randomly generated, preferably to comprise both digits and characters. Such random numbers may be provided by an algorithm running on e.g. the installer device 3 to generate the further unique code, and in the cloud storage 2 to generate the unique code. However, the invention is not limited to such an architecture. The algorithm for generating the random numbers and/or characters may take as input the UID.

In a particular preferred embodiment, direct communication channel is established by use of a smart phone 6 wirelessly communicating with the user device 4. This is an example on a direct communication channel being a channel not involving the cloud storage 2.

A computer implemented method according to any of the preceding claims, wherein installer device 3 retrieves the unique identifier by scanning the device, the scanning preferably comprises optically scanning and/or electronic the code from the device 3.

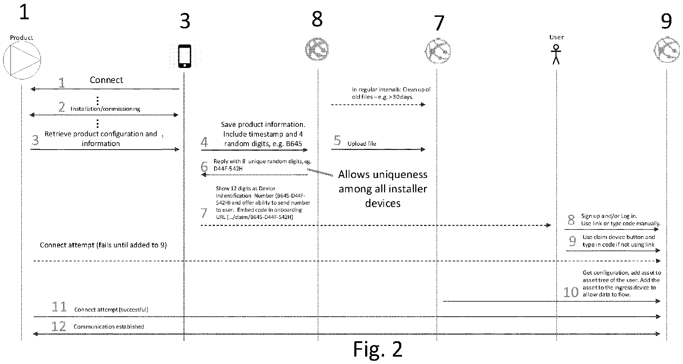

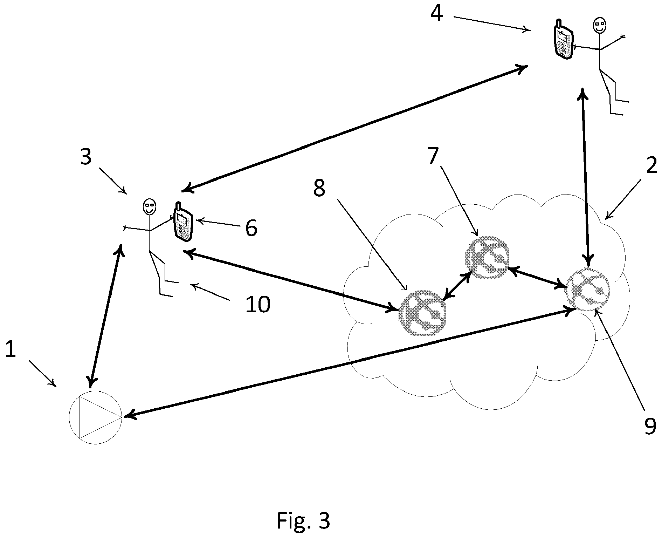

Figure 2 schematically illustrates data exchange between different service and user during enrolment and claim of the device. The figure is based on the architecture shown in Fig. 3. While the architecture in Figs. 2 and 3 contains a file service 7, this service can be left out and the architecture may advantageously be as disclosed in the following.

With reference to Fig. 3, the cloud storage 2 is a service hosted for the user. The cloud storage has a proprietary storage facility 9 and a set-up service 8, where the set-up service 8 is adapted to receive the further unique code from the installer device 3. Once the set-up service 8 is in receipt of the further unique code it generates the unique code and transmit this unique code to the installer device 3.

The set-up service 8 is further adapted to transfer the unique identifier (UID) to proprietary storage facility 9.

The proprietary storage facility 9 is adapted to receive from set-up service 8 the unique codes and the unique identifier UID of the device 1. The proprietary storage facility 9 is adapted to be in data communication with the device 1 and the user device 4 to transmit data as otherwise disclosed herein.

With specific reference to the architecture illustrated in Figs. 2 and 3, a file service 7 is provided datawise in-between the set-up service 8 and the proprietary storage facility 7. In such an architecture,
- the file service 7 stores information regarding the device 1
- the set-up service 8 is in data connection with the file service 7 and is adapted to
   ∘ receive the further unique code from the installer device 3,
   ∘ generate the unique code and transmit this unique code to the installer device 3,
   ∘ transfer the unique identifier UID to the file service 7.
- the proprietary storage facility 9 is adapted to receive from the file service 7 the unique codes and the unique identifier UID of the device 1, and the proprietary storage facility 9 being adapted to be in data communication with the device 1 and the user device 4.

The introduction of the file service 7 has shown be particular advantageous in case the present invention is to be implemented in an existing cloud storage 2 having service that can be used as a set-up service according to the invention and a storage facility that can be used as storage facility according to the invention. Introducing the file service 7 provides the advantage that the method becomes independent on when the set-up service 8 delivers information and when the storage facility 9 is in need for configuration. By implementing the file storage 7, the storage acts as a "buffer" allowing the set-up service 8 and storage facility to operate timewise independently.

While the figures disclose that the device 1 is a pump, the invention is not limited to pumps. It is found that the device 1 may be a valve, a motor, an actuator, in particular a hydraulic, a pneumatic or an electrical actuator, a sensor, in particular a sensor for sensing temperature, vibration, sound, light, pressure, flow and combinations of these, condition monitoring sensors, UV sensors, conductivity sensor, such as for use in in water treatment facilities, or a measuring instrument.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### List of reference symbols used:

- 1: Device
- 2: Cloud storage
- 3: Installer device
- 4: User device
- 5: Direct communication channel
- 6: Smart phone
- 7: File service
- 8: Set-up service
- 9: Proprietary storage facility
- 10: Physical person, such as a service technician
- UID: Unique identifier
- B645: Further unique code
- D44F-542H: Unique code

## Claims

1. A computer implemented method of enrolment of a device to a cloud storage (2), the device (1) having unique identifier (UID) and the device (1) before enrolment is un-authenticated and/or un-authorized in the cloud storage (2), the method comprising:
• retrieve, by an installer device (3), the device's (1) unique identifier (UID)
• storing, by the installer device (3), said unique identifier (UID) in the cloud storage (2),
• provide, by the cloud storage (2), a unique code (D44F-542H) affiliated to said unique identifier (UID),
• receive, at the installer device (3), the unique code (D44F-542H),
• forward, the unique code (D44F-542H) to a user, via a direct communication channel (5),
• claim, by use of the user device (4) and the unique code, the device (1),
• upon successful claim of the device (1), establish by use of the cloud storage, data communication between the device (1) and the user device (4).

2. A method according to claim 1, further comprising
• provide, by the installer device (3), a further unique code (B645) affiliated to said unique identifier,
• storing by the installer device (3) said further unique code (B645) in the cloud storage (2),
• forward said further unique code together with said unique code (B645) to said user via said direct communication channel (5).

3. A method according to claim 1 or 2, wherein retrieval of the unique identifier (UID) is carried out in consequence of a service technician actively activates a transmittal function of the device or passively reads, by use of the installer device the unique identifier (UID), while the service technician preferably being in so close proximity to the device (1) that he can visually inspect the device (1).

4. A computer implemented method according to any of the preceding claims, wherein the unique code(s) is (are) forwarded to the user device (4) by the installer device (3).

5. A computer implemented method according to any of the preceding claims, wherein the claim of the device (1) comprising uploading the unique code(s) to the cloud storage by use of the user device (4).

6. A computer implemented method according to any of the preceding claims, wherein the installer device in addition to retrieve the unique identifier (UID) also retrieves commissioning data and/or data on installation of the device (1) and stores said commissioning data and/or said data on installation of the device (1) in the cloud storage (2).

7. A computer implemented method according to any of the preceding claims, wherein the unique code(s) is(are) randomly generated, preferably to comprise both digits and characters.

8. A computer implemented method according to any of the preceding claims, wherein the direct communication channel is established by use of a smart phone (6) wirelessly communicating with the user device (4).

9. A computer implemented method according to any of the preceding claims, wherein the direct communication channel is a channel not involving the cloud storage (2).

10. A computer implemented method according to any of the preceding claims, wherein installer device (3) retrieves the unique identifier by scanning the device, the scanning preferably comprises optically scanning and/or electronic the code from the device (3).

11. A computer implemented method according to any of the preceding claims 2-10, wherein the cloud storage (2) is a service hosted for the user and comprises
• a proprietary storage facility (9);
• a set-up service (8) being adapted to
∘ receive the further unique code from the installer device (3),
∘ generate the unique code and transmit this unique code to the installer device (3),
∘ transfer the unique identifier (UID) to the proprietary storage facility (9)
wherein, the proprietary storage facility (9) is adapted to receive from set-up service (8) the unique codes and the unique identifier (UID) of the device (1), said proprietary storage facility (9) being adapted to be in data communication with the device (1) and the user device (4).

12. A computer implemented method according to any of the preceding claims, wherein the device (1) is a pump, a valve, a motor, an actuator, in particular a hydraulic, a pneumatic or an electrical actuator, a sensor, in particular a sensor for sensing temperature, vibration, sound, light, pressure, flow and combinations of these, condition monitoring sensors, UV sensor, conductivity sensor, or a measuring instrument.
